# EUROPÄISCHE PATENTSCHRIFT

(11) **EP 0 739 068 B1**
(45) Veröffentlichungstag und Bekanntmachung des Hinweises auf die Patenterteilung: **18.09.2002**
(21) Anmeldenummer: 96104658.8
(22) Anmeldetag: 23.03.1996
(51) Int. Cl.: H02G 3/04

(54) **Versorgungseinheit**
Supply unit
Unité de distribution

(30) Priorität: 20.04.1995 DE 19514590
(43) Veröffentlichungstag der Anmeldung: 23.10.1996
(73) Patentinhaber: DRÄGERWERK AKTIENGESELLSCHAFT, 23542 Lübeck (DE)
(72) Erfinder: Beuster, Helmut, 23556 Lübeck (DE); Greiff, Rudolf, 23619 Badendorf (DE); Schlör, Georg, 23568 Lübeck (DE); Schlichting, Bernd, 23562 Lübeck (DE); Lenz, Dirk, 22491 Bargteheide (DE)

(56) Entgegenhaltungen:
- US-A- 3 769 502
- US-A- 3 921 345
- US-A- 4 452 499

## Beschreibung

Die Erfindung betrifft eine Versorgungseinheit nach dem Oberbegriff des Patentanspruchs 1.

Eine Versorgungseinheit dieser Art ist in US-A-3 921 345 beschrieben.

Eine weitere Versorgungseinheit für gasförmige- und flüssige Medien sowie elektrische Energie ist aus der EP 0 242 568 B1 bekanntgeworden. Hinter einer durch Stellplatz-Elemente gebildeten Arbeitsplatzebene sind säulenförmige Versorgungskanäle vorgesehen, an welchen Anschlüsse zur Entnahme von elektrischer Energie und gasförmigen Medien angebracht sind. Die Versorgungskanäle sind bis zum Boden geführt und dort verankert. Derartige Versorgungskanäle werden bei labortechnischen Anwendungen eingesetzt, bei denen häufig eine Anpassung an unterschiedliche Aufgabenstellungen auftritt und verschiedenartige Gasund Elektroanschlüsse in ausreichender Zahl vorhanden sein müssen.

Neben Labor-Arbeitsplätzen sind medienführende Versorgungseinheiten auch von medizinischen Arbeitsplätzen bekannt. Hier sind jedoch neben der Flexibilität der Anschlußmöglichkeit von unterschiedlichen Geräten, wie z.B. Beatmungsgeräten und Monitoren, noch weitere Kriterien zu berücksichtigen. So soll der Patient durch Gasversorgungsschläuche und elektrische Leitungen möglichst wenig behindert werden und Anschlüsse sollten außerhalb des unmittelbaren Sichtbereiches des Patienten angeordnet sein.

Von medizinischen Arbeitsplätzen sind schienenförmige Anschlußeinrichtungen bekannt, die horizontal oberhalb des Patientenbettes an der Wand verlaufen und Anschlüsse für medizinische Gase, Vakuum und elektrische Energie enthalten. Nachteilig bei derartigen Anschlußeinrichtungen ist, daß eine geordnete Kabelführung zu den medizinischen Geräten nur schwer zu realisieren ist, und daß ein Großteil der Versorgungsleitungen im Sichtbereich des Patienten liegt. Sofern Geräte gewechselt werden müssen, oder neue Geräte an dem Arbeitsplatz angebracht werden müssen, werden die zugehörigen Anschlußstecker, meistens oberhalb des Patienten, in die zugehörigen Kupplungen oder Elektrosteckdosen eingesteckt.

Der Erfindung liegt die Aufgabe zugrunde, eine Versorgungseinheit der genannten Art derart zu verbessern, daß eine möglichst geringe Beeinträchtigung des Patienten durch Kabelführungen gegeben ist, und daß die Versorgungsschläuche und elektrischen Leitungen in ergonomisch günstiger Position gewechselt werden können.

Die Lösung der Aufgabe erfolgt mit den Mitteln des kennzeichnenden Teils des Patentanspruchs 1.

Der Vorteil der Erfindung besteht im wesentlichen darin, daß an senkrechten Versorgungskanälen, die beidseits des Arbeitsplatzes angebracht sind, die Medienanschlüsse an denjenigen äußeren Seitenteilen befestigt sind, die vom Arbeitsplatz weg weisen. Hierdurch wird eine angenehme Umgebung für den Patienten geschaffen, da die Medienanschlüsse außerhalb seines unmittelbaren Sichtbereiches liegen und außerdem für das Bedienungspersonal eine gute Handhabbarkeit gegeben ist, da alle Anschlüsse von den äußeren Seitenflächen aus bedienbar sind. Durch die erfindungsgemäße Versorgungseinheit wird außerdem eine definierte Trennung von reiner Seite, d.h. Patientenseite, und unreiner Seite, d.h. Geräteseite, erreicht.

Vorteilhafte Ausgestaltungen der Erfindung sind in den Unteransprüchen angegeben.

In zweckmäßiger Weise sind die Basisflächen und die Seitenflächen der Versorgungskanäle zueinander in Form eines Dreiecks angeordnet.

In zweckmäßiger Weise sind die Basisflächen der Versorgungskanäle unmittelbar an einer Wand befestigt. Auf diese Weise können in der Wand verlaufende Versorgungsleitungen unmittelbar aus der Wand heraus in den Innenraum der Versorgungskanäle und von dort zu den Anschlüssen an den äußeren Seitenflächen geführt werden. Die Versorgungsleitungen können besonders einfach von der Wand in die Versorgungskanäle gleitet werden, wenn die Basisflächen stückweise unterbrochen sind.

In zweckmäßiger Weise sind die äußeren Seitenflächen im wesentlichen eben ausgeführt, und die inneren Seitenflächen haben eine im wesentlichen konvexe Körperform. Auf den ebenen, äußeren Seitenflächen lassen sich die medienführenden Anschlüsse besonders einfach montieren, und die konvex gewölbten inneren Seitenflächen schaffen eine für den Patienten angenehme Sichtfläche.

In zweckmäßiger Weise ist im Bereich der Vereinigungsstelle von äußerer Seitenfläche und innerer Seitenfläche ein längs der Versorgungskanäle verlaufender, rohrförmiger Träger vorgesehen. An diesem rohrförmigen Träger können medizinische Apparate, wie z.B. Infusionspumpen, unmittelbar befestigt werden.

In zweckmäßiger Weise sind an dem Träger höhenverstellbare, die Apparate aufnehmende Konsolen vorgesehen. Auf den Konsolen können medizinische Apparate abgestellt werden, die über die Medienanschlüsse an den äußeren Seitenflächen versorgt werden.

In zweckmäßiger Weise sind die Konsolen als um den Träger schwenkbar ausgeführt.

In vorteilhafter Weise ist eine zwischen den Versorgungskanälen verlaufende, rohrförmige Halterung zur Aufnahme von Beleuchtungskörpern angebracht. Besonders zweckmäßig ist es, die Halterung als Fortsetzung der Träger an den Versorgungskanälen auszubilden.

In vorteilhafter Weise ist im Bereich der äußeren Seitenfläche und/oder der Vereinigungsstelle von äußerer- und innerer Seitenfläche ein in vertikaler Richtung, längs der Versorgungskanäle verlaufender, kammförmig ausgebildeter Kabel- und Schlauchhalter angebracht, der zur Fixierung der zu den Anschlüssen führenden Gasversorgungsschläuchen und elektrischen Leitungen dient.

Ein Ausführungsbeispiel der Erfindung ist in der Zeichnung dargestellt und im folgenden näher erläutert.

### Es zeigen

- Figur 1: eine Aufsicht auf die Versorgungsheinheit,
- Figur 2: eine Seitenansicht in Blickrichtung A nach der Figur 1,
- Figur 3: einen Querschnitt durch einen Versorgungskanal,
- Figur 4: einen Ausschnitt B der Figur 3 in Blickrichtung C.

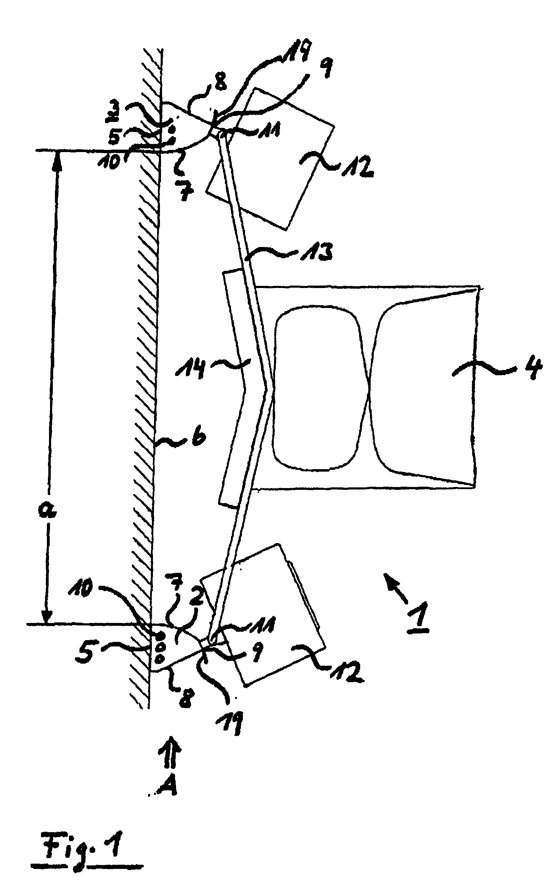

Figur 1 zeigt eine Aufsicht auf eine Versorgungseinheit 1, bestehend aus einem ersten Versorgungskanal 2, einem zweiten Versorgungskanal 3 beidseits eines Bettes 4 als Arbeitsplatz. Jeder der Versorgungskanäle 2, 3 besitzt eine Basisfläche 5, welche direkt an einer Wand 6 angebracht ist, eine konvex gewölbte innere Seitenfläche 7 und eine im wesentlichen plane, äußere Seitenfläche 8. Die Seitenflächen 7, 8 sind an einer Vereinigungsstelle 9 miteinander verbunden. Innerhalb der Versorgungskanäle 2, 3 verlaufen Versorgungsleitungen 10 für elektrische Energie und gasförmige Medien, die zu in den äußeren Seitenflächen 8 befindlichen, in der Figur 1 nicht dargestellten Anschlüssen führen. Im Bereich der Vereinigungsstelle 9 verläuft längs der Versorgungskanäle 2, 3, d.h. senkrecht zur Zeichenebene der Figur 1, ein Träger 11 zur schwenkbaren Befestigung von Konsolen 12, auf denen medizinische Apparate abgestellt werden können. Die medizinischen Apparate sind in der Figur 1 nicht dargestellt. Oberhalb des Bettes 4 sind die Träger 11 in einer rohrförmigen Halterung 13 fortgesetzt, an welcher ein Beleuchtungskörper 14 befestigt ist. Die Halterung 13 ist in Richtung zum Bett 4 hin abgewinkelt. Die Versorgungskanäle 2, 3 sind im Abstand a derart an der Wand 6 befestigt, daß das Bett 4 zwischen die Versorgungskanäle 2, 3 geschoben werden kann.

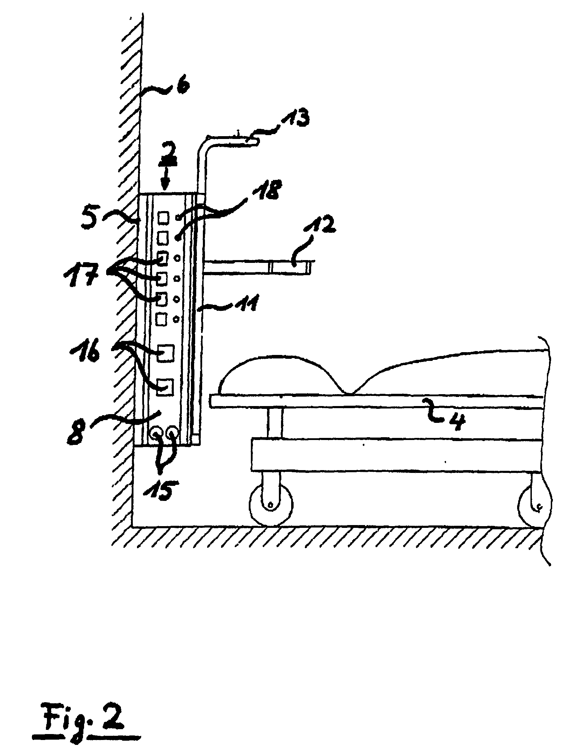

Figur 2 zeigt eine Seitenansicht auf die äußere Seitenfläche 8 des ersten Versorgungskanals 2 in Blickrichtung A nach der Figur 1. Gleiche Komponenten sind mit gleichen Bezugsziffern der Figur 1 bezeichnet. Zur Versorgung der nicht dargestellten medizinischen Apparate, die entweder auf einer der Konsolen 12 oder neben dem Bett 4 angeordnet sein können, sind an den äußeren Seitenflächen 8 Gasentnahmesteckdosen 15 für Druckgas und Vakuum, Monitoranschlüsse 16 und Elektrosteckdosen 17 mit Potential-Ausgleichsbolzen 18 vorgesehen. Die von den Anschlüssen 15, 16, 17, 18 seitlich abgehenden, in der Figur nicht dargestellten Gasversorgungsschläuche und elektrischen Leitungen werden direkt zu den auf den Konsolen 12 befindlichen, oder neben dem Bett stehenden Apparaten geführt und liegen damit außerhalb des Sichtbereiches des Patienten. Sofern Versorgungsschläuche oder elektrische Leitungen gewechselt werden müssen, werden diese aus den Anschlüssen 15, 16, 17, 18 einfach herausgezogen, ohne daß der Patient hierdurch beeinträchtigt wird.

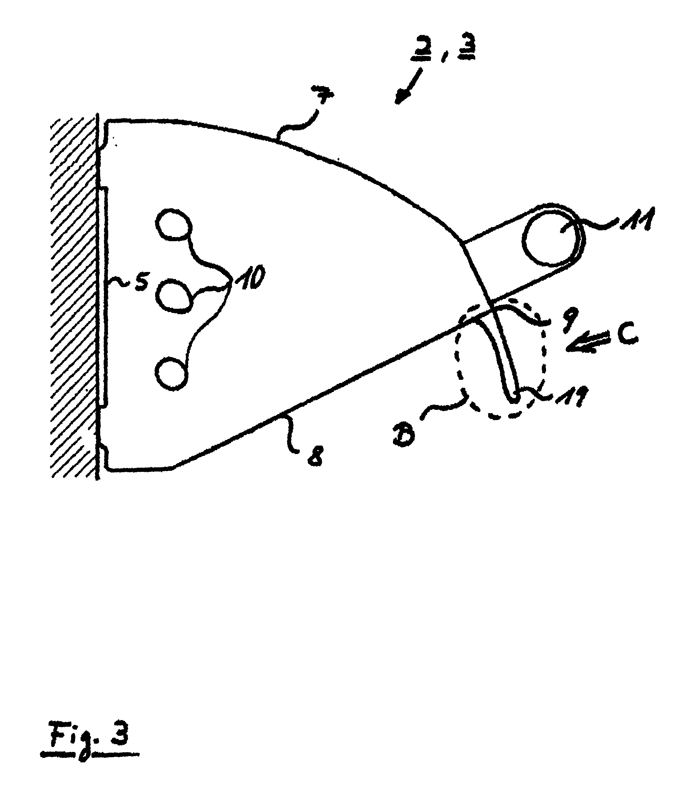

Figur 3 zeigt einen Querschnitt durch einen der Versorgungskanäle 2, 3. Gleiche Komponenten sind mit gleichen Bezugsziffern der Figuren 1 und 2 bezeichnet. Wie aus der Figur 3 ersichtlich, lassen sich die Versorgungskanäle 2, 3 besonders einfach aus Profilelementen herstellen.

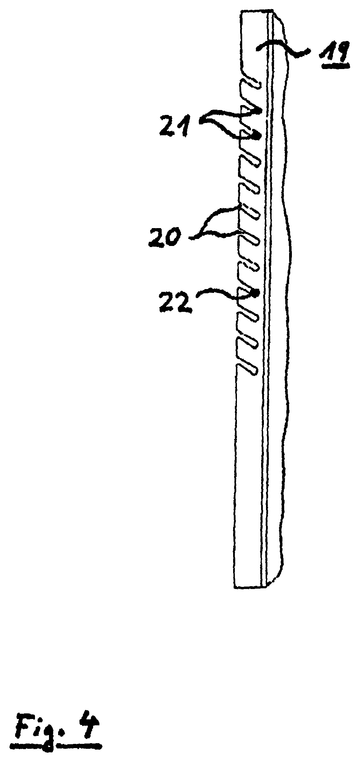

Figur 4 zeigt einen Ausschnitt B der Figur 3, in welchem ein kammartig ausgebildeter Kabel- und Schlauchhalter 19, mit einzelnen parallel zueinander verlaufenden Nuten 20 zur Fixierung von Gasversorgungsschläuchen 21 und elektrischen Leitungen 22, die von den in den Figuren nicht dargestellten medizinischen Apparaten zu den Anschlüssen 15, 16, 17, 18 verlaufen, dargestellt ist. Mit dem Schlauchhalter 19 wird eine besonders übersichtliche Leitungsführung erreicht. Der Kabel- und Schlauchhalter 19 verläuft parallel zum Träger 11, Figur 3.

## Patentansprüche

1. Versorgungseinheit zur Versorgung eines Arbeitsplatzes (4) mit elektrischer Energie und/oder gasförmigen Medien, mit einem ersten, vertikal verlaufenden Versorgungskanal (2) und einem zweiten, vertikal verlaufenden Versorgungskanal (3), wobei die elektrische Energie und die Medien zu Anschlüssen (15, 16, 17, 18) an zumindestens einen der Versorgungskanäle (2, 3) geführt sind, von welchem aus der Arbeitsplatz (4) versorgt wird, wobei jeder der Versorgungskanäle (2, 3) zumindestens eine Basisfläche (5) und von der Basisfläche (5) profilartig abstehende Seitenflächen (7, 8) aufweist, wobei innere Seitenflächen (7) der Versorgungskanäle (2, 3) einander gegenüber liegen und die äußeren Seitenflächen (8) einander abgewandt sind, wobei zumindestens ein Abschnitt der Seitenflächen (7, 8), oder zumindenstens eine der Seitenflächen (7, 8) als Ganzes, einen Neigungswinkel gegenüber der Basisfläche (5) von kleiner 90 Grad in der Weise besitzt, daß die von der Basisfläche (5) wegweisenden Enden der Seitenflächen (7, 8) an einer gemeinsamen Vereinigungsstelle (9) verbindbar sind, und wobei die Versorgungskanäle (2, 3) einen derartigen Abstand (a) zueinander aufweisen, daß der Arbeitsplatz (4) in den Raum zwischen den Versorgungskanälen (2, 3) bringbar ist, **dadurch gekennzeichnet, daß** die Anschlüsse (15, 16, 17, 18) ausschließlich auf den äußeren Seitenflächen (8) angebracht sind.

2. Versorgungseinheit nach Anspruch 1, **dadurch gekennzeichnet, daß** die Basisfläche (5) und die Seitenflächen (7, 8) zueinander in Form eines Dreiecks angeordnet sind.

3. Versorgungseinheit nach Anspruch 1 oder 2, **dadurch gekennzeichnet, daß** die Basisflächen (5) der Versorgungskanäle (2, 3) unmittelbar an einer Wand (6) befestigt sind.

4. Versorgungseinheit nach einem der Ansprüche 1 bis 3, **dadurch gekennzeichnet, daß** die äußeren Seitenflächen (8) eben sind und die inneren Seitenflächen (7) konvex gewölbt sind.

5. Versorgungseinheit nach einem der Ansprüche 1 bis 4, **dadurch gekennzeichnet, daß** im Bereich der Vereinigungsstelle (9) ein in Richtung der Versorgungskanäle verlaufender, rohrförmiger Träger (11) für Apparate vorgesehen ist.

6. Versorgungseinheit nach Anspruch 5, **dadurch gekennzeichnet, daß** an dem Träger (11) höhenverstellbare, die Apparate aufnehmende Konsolen (12) vorhanden sind.

7. Versorgungseinheit nach Anspruch 6, **dadurch gekennzeichnet, daß** die Konsolen (12) als um den Träger (11) schwenkbar ausgeführt sind.

8. Versorgungseinheit nach einem der Ansprüche 1 bis 7, **dadurch gekennzeichnet, daß** eine zwischen den Versorgungskanälen (2, 3) verlaufende, rohrförmige Halterung (13) zur Aufnahme von Beleuchtungskörpern (14) angebracht ist.

9. Versorgungseinheit nach Anspruch 8, **dadurch gekennzeichnet, daß** die Halterung (13) als Fortsetzung der Träger (11) an den Versorgungskanälen (2, 3) ausgebildet ist.

10. Versorgungseinheit nach einem der Ansprüche 8 oder 9, **dadurch gekennzeichnet, daß** die Halterung (13) als zum Arbeitsplatz (4) hin abgewinkelt ausgeführt ist.

11. Versorgungseinheit nach einem der Ansprüche 1 bis 10, **dadurch gekennzeichnet, daß** im Bereich der äußeren Seitenfläche (8) und/oder der Vereinigungstelle (9) ein sich zumindestens stückweise längs der Versorgungskanäle (2, 3) erstreckender, kammförmig ausgebildeter Kabel- und Schlauchhalter (19) vorgesehen ist.

## Claims

1. Supply unit for supplying a working area (4) with electrical energy and/or gaseous media, having a first, vertically running supply duct (2) and a second, vertically running supply duct (3), the electrical energy and the media being conducted to connections (15, 16, 17, 18) on at least one of the supply ducts (2, 3), from which the working area (4) is supplied, each of the supply ducts (2, 3) having at least one base surface (5) and lateral surfaces (7, 8) protruding in the manner of profiles from the base surface (5), inner lateral surfaces (7) of the supply ducts (2, 3) lying opposite each other and the outer lateral surfaces (8) facing away from each other, at least one section of the lateral surfaces (7, 8), or at least one of the lateral surfaces (7, 8) as a whole, having an angle of inclination relative to the base surface (5) of less than 90 degrees so that the ends of the lateral surfaces (7, 8) pointing away from the base surface (5) can be joined at a common junction (9), and the supply ducts (2, 3) being at such a distance (a) from each other that the working area (4) can be brought into the space between the supply ducts (2, 3), **characterised in that** the connections (15, 16, 17, 18) are disposed exclusively on the outer lateral surfaces (8).

2. Supply unit according to Claim 1, **characterised in that** the base surface (5) and the lateral surfaces (7, 8) are arranged with respect to one another in the shape of a triangle.

3. Supply unit according to Claim 1 or 2, **characterised in that** the base surfaces (5) of the supply ducts (2, 3) are fastened directly to a wall (6).

4. Supply unit according to one of Claims 1 to 3, **characterised in that** the outer lateral surfaces (8) are plane and the inner lateral surfaces (7) are convexly curved.

5. Supply unit according to one of Claims 1 to 4, **characterised in that** a tubular carrier (11) running in the direction of the supply ducts and intended for apparatus is provided in the region of the junction (9).

6. Supply unit according to Claim 5, **characterised in that** height-adjustable supports (12) which receive the apparatus are present on the carrier (11).

7. Supply unit according to Claim 6, **characterised in that** the supports (12) are constructed such that they can pivot about the carrier (11).

8. Supply unit according to one of Claims 1 to 7, **characterised in that** a tubular mounting (13) running between the supply ducts (2, 3) and intended for receiving light fittings (14) is provided.

9. Supply unit according to Claim 8, **characterised in that** the mounting (13) is designed as a continuation of the carriers (11) on the supply ducts (2, 3).

10. Supply unit according to one of Claims 8 and 9, **characterised in that** the mounting (13) is constructed in a manner angled towards the working area (4).

11. Supply unit according to one of Claims 1 to 10, **characterised in that** a cable holder and tube holder (19) designed in the form of a comb and extending at least along portions of the supply ducts (2, 3) is provided in the region of the outer lateral surface (8) and/or of the junction (9).

## Revendications

1. Unité d'alimentation destinée à alimenter un poste de travail (4) en énergie électrique et/ou en fluides gazeux, comprenant un premier canal d'alimentation (2) vertical et un deuxième canal d'alimentation (3) vertical, l'énergie électrique et les fluides étant acheminés vers des raccords (15, 16, 17, 18) présents sur au moins l'un des canaux d'alimentation (2, 3), à partir desquels le poste de travail (4) est alimenté, chacun des canaux d'alimentation (2, 3) présentant au moins une surface de base (5) et des surfaces latérales (7, 8) dépassant de la surface de base (5) à la façon d'un profilé, les surfaces latérales intérieures (7) des canaux d'alimentation (2, 3) se faisant face et les surfaces latérales extérieures (8) étant orientées de façon opposée, au moins une partie des surfaces latérales (7, 8), ou au moins l'une des surfaces latérales (7, 8), dans sa totalité, présentant un angle d'inclinaison, par rapport à la surface de base (5), inférieur à 90 degrés, de telle sorte que les extrémités des surfaces latérales (7, 8) qui sont orientées à l'opposé de la surface de base (5) puissent se rejoindre en un point de jointure (9), les canaux d'alimentation (2, 3) présentant un écart (a) entre eux tel que le poste de travail (4) puisse être amené dans l'espace entre les canaux d'alimentation (2, 3), **caractérisée en ce que** les raccords (15, 16, 17, 18) sont disposés exclusivement sur les surfaces latérales extérieures (8).

2. Unité d'alimentation selon la revendication 1, **caractérisée en ce que** la surface de base (5) et les surfaces latérales (7, 8) sont disposées, les unes relativement aux autres, suivant la forme d'un triangle.

3. Unité d'alimentation selon la revendication 1 ou 2, **caractérisée en ce que** les surfaces de base (5) des canaux d'alimentation (2, 3) sont fixées directement sur un mur (6).

4. Unité d'alimentation selon l'une des revendications 1 à 3, **caractérisée en ce que** les surfaces latérales extérieures (8) sont plates et les surfaces latérales intérieures (7) sont convexes.

5. Unité d'alimentation selon l'une des revendications 1 à 4, **caractérisée en ce qu'**est prévu, dans la zone du point de jointure (9), un support tubulaire (11) pour appareils, s'étendant dans la direction des canaux d'alimentation.

6. Unité d'alimentation selon la revendication 5, **caractérisée en ce que** sont présentes, sur le support (11), des consoles (12) recevant les appareils et réglables en hauteur.

7. Unité d'alimentation selon la revendication 6, **caractérisée en ce que** les consoles (12) peuvent pivoter autour du support (11).

8. Unité d'alimentation selon l'une des revendications 1 à 7, **caractérisée en ce qu'**est prévu un montant tubulaire (13), s'étendant entre les canaux d'alimentation (2, 3), destiné à recevoir des éléments d'éclairage (14).

9. Unité d'alimentation selon la revendication 8, **caractérisée en ce que** le montant (13), qui est le prolongement des supports (11), est formé sur les canaux d'alimentation (2, 3).

10. Unité d'alimentation selon l'une des revendications 8 ou 9, **caractérisée en ce que** le montant (13) forme un angle en direction du poste de travail (4).

11. Unité d'alimentation selon l'une des revendications 1 à 10, **caractérisée en ce qu'**est prévu, dans la zone de la surface latérale extérieure (8) et/ou du point de jointure (9), un support de câbles et de tuyaux (19) s'étendant, au moins partiellement, le long des canaux d'alimentation (2, 3), et présentant la forme d'un peigne.
